# EUROPÄISCHE PATENTSCHRIFT

(11) **EP 1 033 691 B1**
(45) Veröffentlichungstag und Bekanntmachung des Hinweises auf die Patenterteilung: **15.01.2003**
(21) Anmeldenummer: 00102035.3
(22) Anmeldetag: 02.02.2000
(51) Int. Cl.: G08G 1/09, B60R 11/00, B60K 41/28

(54) **Verteiltes Fahrzeuginformationsverarbeitungs- und Fahrzeugsteuersystem**
Distributed system for vehicle information processing and control
Système distribué de traitement d'informations de véhicule et commande de véhicule

(30) Priorität: 02.03.1999 DE 19909157
(43) Veröffentlichungstag der Anmeldung: 06.09.2000
(73) Patentinhaber: DaimlerChrysler AG, 70567 Stuttgart (DE)
(72) Erfinder: Fuchs, Axel, 64287 Darmstadt (DE); Jameel, Akhtar, 94025 Menlo Park CA (US); Stümpfle, Matthias, 71634 Ludwigsburg (DE)

(56) Entgegenhaltungen:
- EP-A- 0 890 937
- DE-A- 19 625 002
- DE-C- 4 315 494
- SEOKHOON LEE ET AL: "Toward the next generation public traffic information system using Internet" PROCEEDINGS. HIGH PERFORMANCE COMPUTING ON THE INFORMATION SUPERHIGHWAY, XX, XX, 28. April 1997 (1997-04-28), Seiten 505-510, XP002147421
- HILD S G ET AL: "MOBILIZING APPLICATIONS" IEEE PERSONAL COMMUNICATIONS, IEEE COMMUNICATIONS SOCIETY, US, Bd. 4, Nr. 5, 1. Oktober 1997 (1997-10-01), Seiten 26-34, XP000721303 ISSN: 1070-9916

## Beschreibung

Die Erfindung bezieht sich auf ein verteiltes Fahrzeuginformationsverarbeitungs- und Fahrzeugsteuersystem nach dem Oberbegriff des Anspruchs 1.

Ein solches System beinhaltet wenigstens zwei über ein Datenübertragungsnetzwerk kommunizierende Systemteile als Netzknoten, von denen mindestens einer fahrzeugseitig angeordnet ist. Das System insgesamt dient der Ausführung fahrzeugbezogener Anwendungen der verschiedensten, für Fahrzeuge relevanten Arten, wie im Zusammenhang mit Benutzerschnittstellen, interner und externer Kommunikation, Anwendungsunterstützung und mit den eigentlichen Anwendungen bzw. Diensten selbst, z.B. Ansteuerung von Fahrzeugaggregaten, Auswertung von Fahrzeugsensorinformationen und allgemeine Dienste, wie Navigation, Diagnose, Diebstahlschutz und Datenaustausch mit entfernten Netzwerkknoten z.B. über das Internet.

Moderne Fahrzeugsysteme zeichnen sich durch einen immer größer werdenden Datenverarbeitungsanteil, d.h. eine zunehmende Bedeutung von Telematikanwendungen aus. So verlangen z.B. Pannenhilfsdienste und dynamische:Navigationsdienste ebenso wie Internet-basierte Anwendungen die Realisierung verteilter Systeme, bei denen das Fahrzeug nicht mehr als isoliertes Einzelsystem, sondern als aktiver Knoten in einem verteilten Datenkommunikationssystem mit vorzugsweise weltweiter Reichweite betrachtet wird. Fahrzeugseitig implementierte Systemanwendungen werden dabei im allgemeinen sowohl Client- als auch Serverfunktionen übernehmen.

Bei einem in der Offenlegungsschrift DE 196 25 002 A1 offenbarten Fahrzeugkommunikationssystem ist bereits eine Schichtung von für ein Fahrzeugsystem notwendigen Funktionalitäten vorgeschlagen worden, die unter Einsatz einer adaptiven Applikationssteuerung eine gewisse Variabilität in der Zuordnung der Anwendungen zu verschiedenen Schnittstellen und fahrzeugseitigen Geräteeinheiten erlaubt.

Auf dem Gebiet der allgemeinen Datenverarbeitung ist in jüngerer Zeit alternativ zu zentralen Systemarchitekturen ein komponentenbasierter Systemaufbau vorgeschlagen worden, siehe beispielsweise den Zeitschriftenaufsatz D. Kiely, "Are Components - The Future of Software?", IEEE Computer Magazine, Seite 10, Februar 1998. Dabei wird die vom Gesamtsystem zu erbringende Funktion mittels Dekomposition in einzelne Funktionskomponenten zerlegt, die dann durch geeignete Verknüpfung und Kommunikation untereinander die gewünschte Gesamtfunktion erbringen. Die Aufteilung in Komponenten vereinfacht dabei zum einen die Wiederverwendung derselben und das Aufbauen komplexer Systeme aus diesen Komponenten und zum anderen das Erstellen von robusten Komponenten selbst, da diese nur mit einem begrenzten und überschaubaren Funktionsumfang ausgestattet werden müssen. Charakteristisch für die Komponenten ist ihre nach außen gleichartige Architektur, die es auf einfache Weise ermöglicht, sie untereinander zu verknüpfen, wobei die von einer Komponente erbrachte Funktion zunächst unabhängig von dieser Architektur gesehen werden kann.

Das explosive Wachstum des Internet bzw. des World-Wide-Webs hat dazu geführt, daß verteilte Systeme zunehmende Bedeutung gewinnen. Um die Realisierung solcher Systeme zu erleichtern und um komponentenbasierte System umsetzen zu können, haben sich immer mehr verteilte Objektmodelle etabliert. Die Systementwickler stützen sich dabei immer stärker auch auf Internet-orientierte Lösungen für diese Objektmodelle und realisieren sie z.B. mit Java RMI bzw. "Java Beans", siehe entsprechende Internet-Informationen der Firma Sun Microsystems, mit DCOM von Microsoft, siehe die Veröffentlichungen T. Albertson, "Best Practices in Distributed Object Application Development: RMI, CORBA und DCOM, Februar 1998, Internet-Seite "http://developer.com/ news/techfocus/ 022398_dist1.htm" und P.E. Chung et al., "DCOM and CORBA Side by Side, Step by Step, and Layer by Layer, September 1997, Internet-Seite "http://www.cs.wustl.edu/≈schmitt/submit/Paper.html", oder auf Basis von CORBA, siehe auch A. Vogel, K. Duddy, "Java Programming with CORBA", John Wiley & Sons, 1997.

Wie aus der genannten Literatur deutlich wird, ist der Trend hin zu objektorientierten Komponentenmodellen durch die folgenden Vorteile erklärbar: Erstens durch die Wiederverwendung existierender Algorithmen bzw. Software und damit.verbunden durch die Möglichkeit zum "rapid prototyping" von Anwendungen durch "plugand-play"-Interaktion der Komponenten; zweitens durch voneinander unabhängige Entwicklung und Implementierung von Komponenten; drittens durch effiziente Code-Wartung inklusive der systematischen Verteilung von Aktualisierungen bzw. "Updates"; und viertens durch "Lightweight"- und "Thin clients"-Realisierungen, die mit infrastrukturbasierten Systemen kommunizieren, die dort an verschiedenen Stellen lokalisiert sein können. Eine der charakterisierenden Eigenschaften von Komponenten besteht darin, daß sie einer einheitlichen Architekturvorgabe folgen, die es erleichtert, sie zu einem Gesamtsystem zusammenzufügen. Dabei hat diese Architektur primär nichts mit der eigentlichen Funktion der Komponente zu tun. Sie legt vielmehr fest, wie die Komponenten miteinander agieren, aber nicht, worüber sie sich "unterhalten". Diese Charakterisierung gilt unabhängig davon, ob die konkrete Komponente in Software oder Hardware realisiert ist.

Der genannte Trend zu Komponentenmodellen äußert sich in der zunehmenden Bedeutung von Technologien, die verteilte Komponentensysteme unterstützen, wie "Java Remote Method Invocation (RMI)" als Basis für die JavaBeans-Komponenten, "Common Object Request Broker Architecture (CORBA)" und "Distributed Component Object Model (DCOM)" von Microsoft zur Realisierung von ActiveX. Alle diese Modelle folgen dem Client/Server-Ansatz. Bisherige Fahrzeuge sind, wenn sie am Ende der Produktion dem Kunden übergeben werden, in ihrer Funktionalität bezüglich ausführbarer Dienste relativ stark fixiert. In Zukunft werden im Fahrzeug jedoch immer mehr Dienste zum Einsatz kommen, wie sie auch in der Büround Geschäftswelt Verwendung finden, die im Moment der Fertigstellung des Fahrzeugs aber häufig noch gar nicht existieren. Der Kunde wird daher häufig den Wunsch haben, zur Lebenszeit des Fahrzeugs dieses mit entsprechenden neuen Diensten nachrüsten zu können. Erfolgt die Nachrüstung durch zusätzlich in das Fahrzeug eingespielte Software, so reicht hierfür irgendwann der dafür notwendige Speicherplatz im Fahrzeug nicht mehr aus. Eine Nachrüstung mit zusätzlicher Hardware ist hingegen vergleichsweise kostenintensiv und fehleranfällig und verlangt in den meisten Fällen einen Werkstattaufenthalt. Es besteht daher Bedarf an Systemen, die relativ einfach mit zusätzlichen Funktionen nachrüstbar sind, die beispielsweise als Software-Bausteine realisiert sind, so daß keine Hardware-Modifikation nötig ist. Des weiteren ist es wünschenswert, das System durch dynamische Verlagerung vorzugsweise der Software-Bausteine zur Laufzeit des Fahrzeugs von oder zum fahrzeugseitigen Systemteil optimal an sich ändernde Anforderungen bzw. Bedingungen anpassen zu können. Dies trifft beispielsweise für wechselnde Bedingungen bei der drahtlosen Kommunikation zu. Ist nur eine schmalbandige Kommunikationsstrecke vorhanden, sollte so wenig wie möglich Kommunikation betrieben und so viel wie möglich notwendige Software im Fahrzeug untergebracht werden. Ist hingegen eine Kommunikationsverbindung mit hoher Übertragungskapazität vorhanden, kann gewisse Bearbeitungssoftware günstiger in einem fahrzeugexternen Systemteil untergebracht sein, um die dort meist größeren Rechenkapazitäten ausnutzen zu können.

Der Erfindung liegt daher als technisches Problem die Bereitstellung eines Fahrzeuginformationsverarbeitungs- und Fahrzeug-Steuersystems der eingangs genannten Art zugrunde, das in seiner Struktur zur Erfüllung unterschiedlicher fahrzeugbezogener Anwendungen vergleichsweise flexibel so aufgebaut ist, daß ein Nachrüsten mit weiteren Funktionen mit relativ geringem Aufwand möglich ist und die Voraussetzung geschaffen ist, die Ausführung der geforderten Anwendungen dynamisch und flexibel zwischen den Systemteilen variabel aufteilen zu können und das Fahrzeug als aktiven Netzknoten in ein gegebenenfalls weltumspannendes Datennetzwerk integrieren zu können.

Die Erfindung löst dieses Problem durch die Bereitstellung eines Fahrzeuginformationsverarbeitungs- und Fahrzeugsteuersystems mit den Merkmalen des Anspruchs 1. Die Systemteile dieses verteilten, fahrzeugbezogenen Systems haben charakteristischerweise einen komponentenbasierten Aufbau aus verschiedenen, miteinander kommunizierenden Komponenten zur Ausführung der verschiedenen gewünschten Anwendungsfunktionen. Jede dieser so definierten Komponenten, die vorzugsweise in Software realisiert sind, besitzt einerseits eine Funktionsaufruf-Schnittstelle, über welche die von der Komponente ausgeführte Funktion von allen aktiven Knoten des Netzwerks abrufbar ist, und eine Konfigurations-schnittstelle, über die ihre Konfiguration variabel mittels einer zu diesem Zweck vorgesehenen Konfigurationsmanagereinheit festlegbar ist. Dazu erhält die Konfigurationsmanagereinheit Kenntnis über die im System vorhandenen Komponenten und konfiguriert die jeweilige Komponente über deren.Konfigurations-Schnittstelle in Abhängigkeit davon, welche anderen Komponenten vorhanden sind. Mit dieser Konfigurationsmanagereinheit kann folglich eine Komponente, die neu in einen Systemteil eingebracht wird, sei es durch Nachrüstung des Systems mit derselben oder durch Verlagerung aus einem anderen Systemteil, so "hineinkonfiguriert" werden, daß sie optimal mit den übrigen vorhandenen Komponenten kommunizieren kann. Die Einpassung der, neuen Komponente in den betreffenden Systemteil kann gegebenenfalls zusätzlich eine Modifizierung der Konfiguration einer oder mehrerer der bereits zuvor vorhandenen Komponenten beinhalten. Durch diesen Aufbau läßt sich das fahrzeugbezogene System mit einer allgemeinen Datenverbeitungs-Plattform ausrüsten, die ein flexibles Nachladen weiterer, ausführbarer fahrzeugbezogener Anwendungen zu jedem Zeitpunkt während der Lebensdauer des Fahrzeugs und ein kostenoptimiertes Reagieren von Dienstausführungen auf variable externe Bedingungen ermöglicht.

Bei einem nach Anspruch 2 weitergebildeten System ist für den jeweiligen Systemteil ein Komponentenlader vorgesehen, in der allgemeinen EDV auch als "Badewanne" bezeichnet, der die jeweiligen Komponenten aufnimmt und über den diese mit einem Betriebssystem des Systemteils kommunizieren, an das andererseits je nach Systemteil verschiedene externe Geräteeinheiten angekoppelt sind.

Bei einer Weiterbildung des Systems nach Anspruch 3 ist eine funktionsorientierte Hierarchie der Komponenten in fahrzeugbauteilbezogene Komponenten oder "Interface"-Komponenten, die sich eng an den vorhandenen Hardware-Fahrzeuggeräteeinheiten orientieren und zum Beispiel den Zugriff auf Hardware-Schnittstellen für Kommunikationsgeräte oder die Anzeige- und Kontrollgeräte einer Benutzerschnittstelle realisieren, in Aggregations-Komponenten, die Dienste anbieten, welche Rohinformationen aus den fahrzeugbauteilbezogenen Komponenten aggregieren, und in übergeordnete Anwendungs-Komponenten vorgesehen, welche die eigentlichen Dienste repräsentieren und die sowohl auf die Aggregations-Komponenten als einer Zwischenschicht als auch auf die fahrzeugbauteilbezogenen bzw. Benutzerschnittstellen-Komponenten Zugriff haben.

Bei einem nach Anspruch 4 weitergebildeten System sind Mittel zum dynamischen Verlagern einer oder mehrerer der Komponenten zwischen den beteiligten Systemteilen während der Systemlaufzeit und damit insbesondere zu beliebigen Zeiten während der gesamten Lebenszeit des Fahrzeugs vorgesehen. Diese Komponentenverlagerungsmittel nutzen die Tatsache, daß die Komponenten mit einer Konfigurations-Schnittstelle versehen sind und über diese variabel in eine neue Komponentenumgebung eines anderen Systemteils "hineinkonfigurierbar" sind. Dadurch kann eine jeweilige Komponente beispielsweise abhängig von sich ändernden externen Bedingungen, wie der verfügbaren Übertragungskapazität der Kommunikationsstrecke des Netzwerks, für gewisse Zeiten in einem und für andere Zeiten in einem anderen Systemteil plaziert werden. Für eine solche Verlagerung eignen sich insbesondere diejenigen Komponenten, die nicht eng mit fahrzeugseitigen Hardware-Geräteeinheiten zusammenhängen.

Bei einem nach Anspruch 5 weitergebildeten System erfolgt die Kommunikation zwischen anwendungsbezogenen Komponenten direkt, wobei dann die Komponente die Schnittstellen derjenigen Komponenten kennen muß, die sie verwendet, oder über eine jeweilige, gemeinsam genutzte Datenhaltungs-Komponente, in welche die beteiligten Anwendungs-Komponenten neue Informationen einschreiben und dort neu eingeschriebene Informationen von anderen beteiligten Komponenten auslesen können. In diesem Fall brauchen die Anwendungs-Komponenten die Schnittstellen der anderen Komponenten nicht zu kennen, es muß jedoch vereinbart werden, welche Inhalte in die Datenhaltungs-Komponente geschrieben werden.

Vorteilhafte Ausführungsformen der Erfindung sind in den Zeichnungen dargestellt und werden nachfolgend beschrieben. Hierbei zeigen:
- Fig. 1: eine schematische Darstellung eines verteilten Fahrzeuginformationsverärbeitungs- und Fahrzeugsteuersystems mit fahrzeugseitigem und fahrzeugexternen, miteinander vernetzten Systemteilen,
- Fig. 2: ein schematisches Blockdiagramm der Umgebung einer PortManager-Komponente im fahrzeugseitigen Systemteil von Fig. 1,
- Fig. 3: ein schematisches Blockdiagramm der Umgebung einer Location-Manager-Komponente im System von Fig. 1,
- Fig. 4: ein schematisches Blockdiagramm der Umgebung einer Präsentations-Manager-Komponente im System von Fig. 1
- Fig. 5: ein schematisches Blockdiagramm der prinzipiellen, komponentenbasierten Architektur des Systems von Fig. 1,
- Fig. 6: ein schematisches Blockdiagramm der funktionsorientierten hierarchischen Aufteilung der Komponenten im System von Fig. 1,
- Fig. 7: ein schematisches Blockdiagramm zur Veranschaulichung der dynamischen Verlagerung einer Komponente zwischen Systemteilen von Fig. 1,
- Fig. 8a und 8b: schematische Blockdiagramme zur Veranschaulichung der Komponentenverlagerung am Beispiel einer Sprachbedien-Anwendung,
- Fig. 9: ein schematisches Blockdiagramm eines NavigationsTeilsystems des Systems von Fig. 1 auf Diensteschnitt-stellen-Basis,
- Fig. 10: Sein schematisches Blockdiagramm zur Veranschaulichung einer Dienstinteraktion im System von Fig. 1 über eine Datenhaltungs-Komponente und
- Fig. 11: ein schematisches Blockdiagramm zur Veranschaulichung des Aufrufs einer Komponentenmethode.

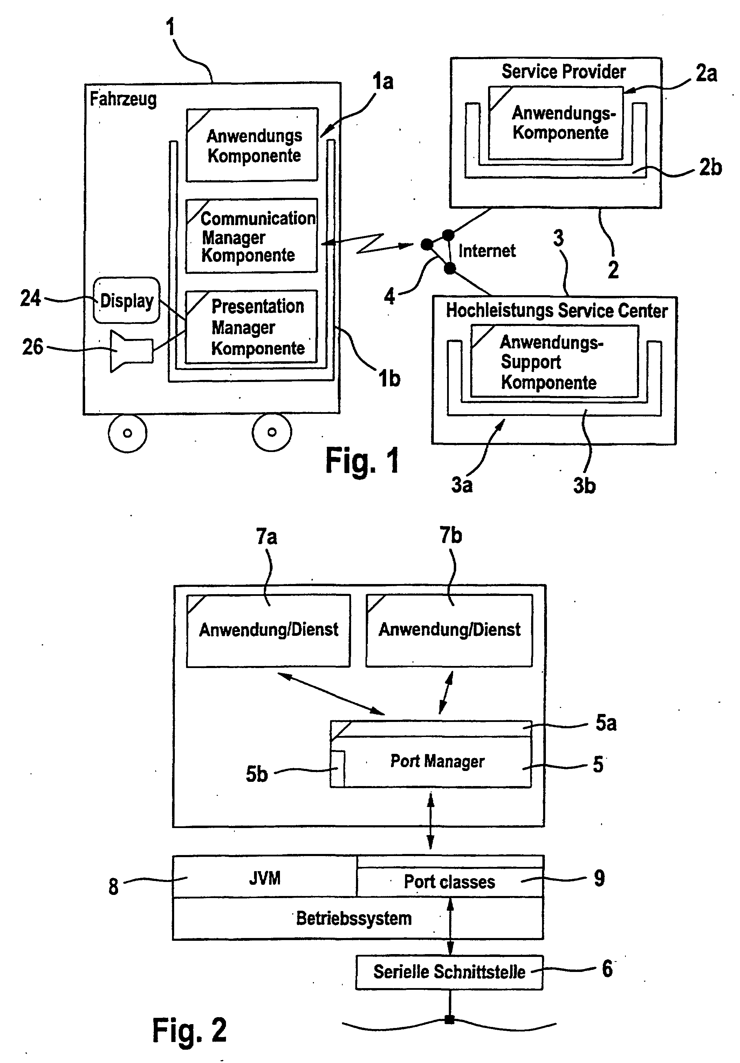

Fig. 1 zeigt schematisch ein verteiltes Fahrzeuginformationsverarbeitungs- und Fahrzeugsteuersystem, das eine Mehrzahl von räumlich getrennten Systemteilen 1a, 2a, 3a umfaßt, die aktive Netzknoten eines Datenübertragungsnetzwerks 4, wie z.B. das Internet, bilden und über dieses miteinander kommunizieren. Ein erster Systemteil 1a befindet sich im Fahrzeug 1 selbst, das einen "Mobile-Host" des Netzwerks 4 darstellt. Ein zweiter, stationärer Systemteil 2a befindet sich in einem Service-Provider 2, während sich ein dritter Systemteil 3a in einem Hochleistungs-Service-Center 3 befindet. Weitere Fahrzeuge können in gleicher Weise aktive Netzknoten bilden, die auf Dienste des Service-Providers 2 und des Hochleistungs-Service-Centers 3 zugreifen können, wobei in nicht gezeigter weise auch jeweils eine Mehrzahl der beiden letztgenannten Dienstanbieter im Datennetz 4 vorhanden sein kann. Diese fahrzeugexternen Dienstanbieter 2, 3 dienen üblicherweise vor allem dazu, Dienste für das Fahrzeug 1 auszuführen, die'eine relativ hohe Rechenkapazität erfordern, wie sie im Fahrzeug 1 nicht ohne weiteres verfügbar ist, z.B. aufwendige Navigationsdienste wie verkehrslageabhängige Routenfindung. Das Fahrzeug 1 hat ebenso wie die stationären Dienstanbieter 2, 3 eine Netzwerkidentität, mit dem es im Netzwerk 4 bekannt ist. In den Funktionsblöcken der drei gezeigten Netzknoten 1, 2, 3 ist schematisch angedeutet, daß der dort jeweils implementierte Systemteil 1a, 2a, 3a einen komponentenbasierten Aufbau besitzt, worauf unten näher eingegangen wird. Für den vorliegenden Anwendungsfall von Fahrzeugsystemen erscheint hierfür von den oben genannten drei herkömmlichen Technologien, die verteilte Komponentensysteme unterstützen, nämlich RMI, CORBA und DCOM, die Java-RMI Technologie besonders geeignet, da sie plattformunabhängig und mit relativ geringem Aufwand handhabbar ist.

Die Komponenten, aus denen die Systemteile 1, 2, 3 und damit das System insgesamt aufgebaut sind, beinhalten jeweils zwei Schnittstellen, und zwar eine Funktionsaufruf- oder Remote-Schnittstelle, über welche die eigentliche Funktion der betreffenden Komponente, d.h. ihr Dienst, von einer anderen Komponente desselben Systemteils oder auch von einem entfernten Netzknoten aus aufgerufen werden kann, und eine Konfigurations-Schnittstelle, die zur variablen, situationsangepaßten Konfigurierung der Komponente dient. Über diese Konfigurations-Schnittstelle kann die Komponente variabel in verschiedene Umgebungen des Systems "hineinkonfiguriert" werden, und vorhandene Komponenten können über diese Schnittstelle von der neu plazierten Komponente in Kenntnis gesetzt werden. Dies ermöglicht ein einfaches Einbringen und Verlagern einer Komponente auch nach der Systemgenerierung zur Systemlaufzeit, selbst bei geänderten Randbedingungen des Systems. In diesem Fall müssen die neu eingebrachten und unter Umständen auch die schon bisher vorhandenen Komponenten des Systems aufeinander angepaßt werden. Dies kann z.B. bedeuten, daß die Adressen der Komponenten untereinander bekanntgemacht werden müssen, wozu die Komponenten eine eigene "Home-Page" anbieten, über welche die notwendigen Modifikationen vorgenommen werden können. Vorliegend ist zur Durchführung dieser Konfigurationsaufgabe eine spezielle Konfigurationsmanagereinheit vorgesehen. Diese weiß, welche Komponenten momentan im System vorhanden sind und hat über die Konfigurations-Schnittsteile Zugriff auf die einzelnen Komponenten zur Modifikation ihrer Konfiguration.

Der Systemteil 2a des Service-Providers 2 enthält primär Anwendungs-Komponenten zur Ausführung von Diensten fahrzeugbezogener Funktionalität, während der Systemteil 3a im Hochleistungs-Service-Center 3 primär Anwendungs-Support-Komponenten enthält, die Hochleistungsrechenkapazitäten benötigen. Im fahrzeugseitigen Systemteil 1a sind neben Anwendungs-Komponenten, welche die eigentlichen Dienstanwendungen repräsentieren, vor allem auch "gerätenahe" Komponenten vorhanden, die zur Steuerung von im Fahrzeug-1 verbauten Hardware-Geräteeinheiten dienen, wie z.B. eine Präsentations-Manager-Komponente 19, die auf eine optische Anzeige 24 und einen Lautsprecher 26 zugreift. Zusätzlich dienen Kommunikations-Manager-Komponenten der Abwicklung von Datenkommunikationsvorgängen zwischen den Systemteilen 1a, 2a, 3a über das Netzwerk 4. Der Gesamtheit der Komponenten des jeweiligen Systemteils 1a, 2a, 3a ist ein zugehöriger Komponenten-Lader ("Badewanne") oder Komponenten-Server 1b, 2b, 3b zugeordnet. Als ein solcher Komponenten-Lader eignet sich z.B. der in der Programmiersprache Java implementierte ChaiServer der Firma Hewlett-Packard, der das Laden der Komponenten sowie das Routing von Methodenaufrufen an die entsprechenden Komponenten unterstützt; für weitere Details siehe die Firmeninformationen Hewlett-Packard "HP ChaiServer: An Overview" auf der Internet-Seite "http://www.chai.hp.com/emso/pdf/chaiserverwp.pdf" und
"HP Application Server" auf Internet-Seite
"http://www.hpconnect.com/embedded/vm/sweb.htm".

In den Fig. 2 bis 4 sind drei Beispiele für Komponenten des Fahrzeuginformationsverarbeitungs- und Fahrzeugsteuersystems veranschaulicht. Fig. 2 zeigt eine Port-Manager-Komponente 5 in ihrer Systemumgebung, z.B. innerhalb des im Fahrzeug 1 befindlichen Systemteils. Die Port-Manager-Komponente 5 gehört zu einer Gruppe von hardwareunterstützenden Interface-Komponenten, die eng im Zusammenhang mit fahrzeugseitigen Hardware-Geräteeinheiten stehende Funktionen ausführen, z.B. Treiberfunktionen. Die Port-Manager-Komponente 5 ermöglicht den Zugriff auf eine serielle Schnittstelle 6 der Maschine, hier dem Fahrzeug 1, auf der sie abläuft. Dabei werden die Zugriffsmethoden so zur Verfügung gestellt, daß auf sie von jeder berechtigten Remote-Komponente zugegriffen werden kann. Die Port-Manager-Komponente 5 kennt hierzu die Schnittstellen des Systems und verwaltet unter anderem die Zuordnung der Schnittstellen und der angeschlossenen Geräte. Sie ist außerdem verantwortlich für die Regelung von konkurrierenden Aufrufen anderer Komponenten auf die Ports. Über ihre Remote-Schnittstelle 5a erlaubt die Port-Manager-Komponente 5 einen Zugriff auf die Schnittstellen des Systems von jeder beliebigen Stelle im Netzwerk, wie z.B. von zwei explizit gezeigten Anwendungen 7a, 7b. Zusätzlich ist die Konfigurations-Schnittstelle 5a der Port-Manager-Komponente 5 schematisch gezeigt. Die Port-Manager-Komponente 5 hat keine Information über den semantischen Inhalt der Informationen, die über sie abgerufen oder geschrieben wird. In der gewählten Java-Implementierung ist daher die Java-Virtual-Machine (JVM) 8 durch zusätzlich gebildete Klassen 9, d.h. "Port-Classes", in die Lage versetzt, einen physikalischen Zugriff auf die serielle Schnittstelle 6 zu erlauben.

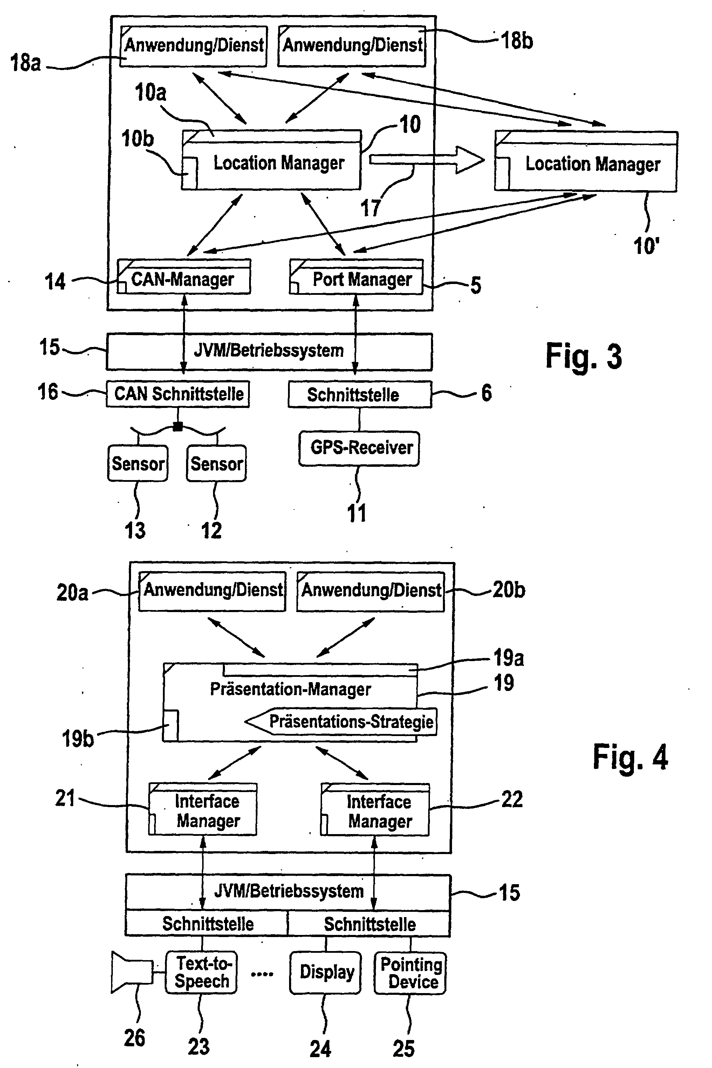

Die in Fig. 3 in ihrer Einbettung in die architektonische Systemumgebung gezeigte Location-Manager-Komponente oder Positions-Manager-Komponente 10 hat die Funktion, Positionsinformaton zu sammeln und diese dann aggregiert als Ortsinformationsdienst anzubieten. Mögliche Informationsquellen sind z.B. ein GPS-Empfänger 11 und Koppelnavigationssensoren 12, 13, wie Kompaß und Radumdrehungszähler. Die Location-Manager-Komponente 10 greift dazu auf entsprechende Interface-Komponenten zu, wie den oben erwähnten Port-Manager 5 und eine CAN-Manager-Komponente 14, die ihrerseits über die JVM/Betriebssystems-Schicht 15 auf eine CAN-Schnittstelle 16 zugreift.

Mit einem Auslagerungspfeil 17 ist eine Auslagerungsmöglichkeit veranschaulicht, wonach die Location-Manager-Komponente 10 nicht zwingend auf derselben Maschine, z.B. dem Fahrzeug 1, laufen muß wie die Interface-Komponenten 5, 14, auf die sie zugreift, sondern eine externe, ausgelagerte Komponente 10' bilden kann, die sich in einem anderen Systemteil befindet. Ob eine solche Auslagerung zweckmäßig ist, hängt von den jeweils momentanen Randbedingungen, insbesondere dem Aufwand und den Kosten für die Datenkommunikation zwischen den Systemteilen ab. Im übrigen weist auch die Positions-Manager-Komponente 10 wie alle Komponenten des erfindungsgemäßen Systems wiederum eine Remote-Schnittstelle 10a zur Kommunikation mit anderen Diensten 18a, 18b und eine Konfigurations-Schnittstelle 10b auf.

Fig. 4 zeigt wiederum eingebettet in ihre Systemumgebung eine Präsentations-Manager-Komponente 19 mit Remote-Schnittstelle 19a zum Funktionsabruf durch andere Anwendungen 20a, 20b und Konfigurations-Schnittstelle 19b. Die Präsentations-Manager-Komponente 19 ist für die Wiedergabe von Information der Anwendungen 20a, 20b zuständig und gibt die Information in Abhängigkeit von austauschbaren Strategien an den Benutzer weiter. Diese Strategien können beispielsweise beinhalten, daß während der Fahrt Information nur über Sprachausgabe stattfindet und eine optische Anzeige (Display) nur im Stand aktiviert wird. Durch solche Strategien lassen sich erforderliche Sicherheitsvorkehrungen in das System einbringen, damit der oder die Fahrzeuginsassen nicht von ihrer eigentlichen Aufgabe abgelenkt werden. Der Präsentations-Manager hat zur Erfüllung seiner Aufgabe über jeweilige Schnittstellen-Manager-Komponenten 21, 22 und das Betriebssystem 15 nebst entsprechenden Schnittstellen Zugriff auf Benutzerschnittstellen-Komponenten des Fahrzeugs, wie "Text-to-Speech"-, "Speech-to-Text"-Geräte 23, optische Anzeigen 24 und "Touch-Screen"- bzw. "Pointing"-Geräte. Die Präsentations-Manager-Komponente 19 kooperiert eng mit dem Konfigurationsmanagement des Systems, da sie Informationen darüber benötigt, welche Ausund Eingabegeräte im Fahrzeug vorhanden sind. Außerdem ist sie in der Lage, konkurrierende Ausgabeanforderungen verschiedener Anwendungen geeignet aufzulösen, vergleichbar einem "Window-Manager".

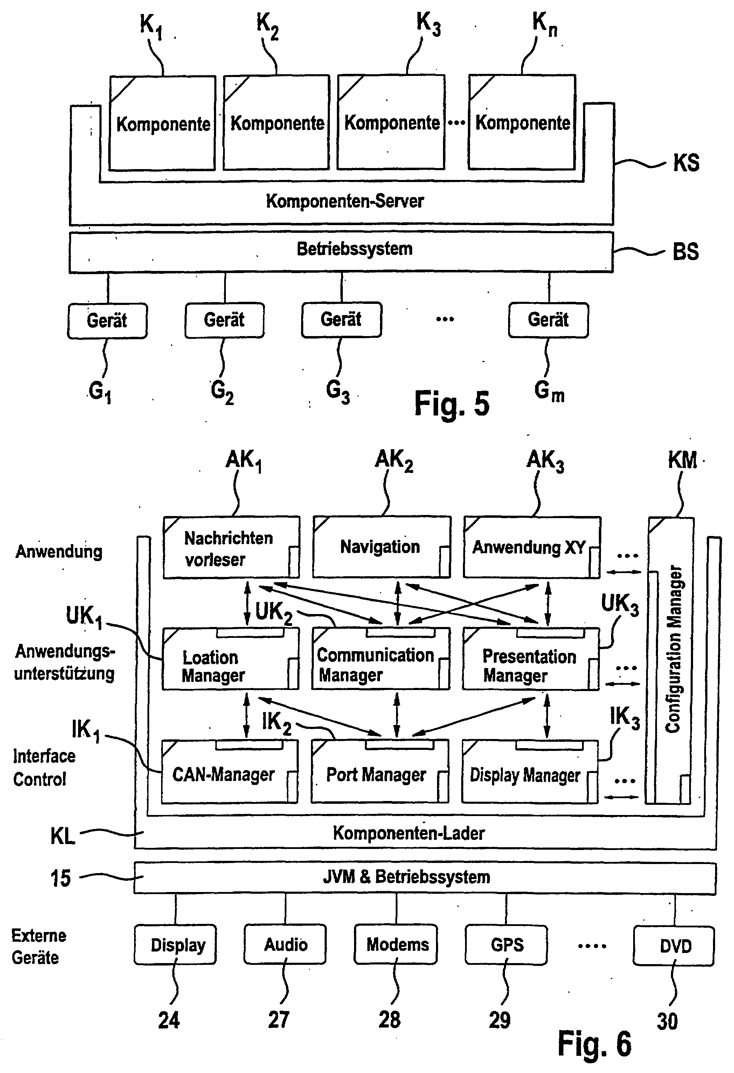

Wie gesagt, ist die Architektur des verteilten Fahrzeuginformationsverarbeitungs- und Fahrzeugsteuersystems vollständig aus Komponenten aufgebaut, wobei in den Figuren die Komponenten zur einfacheren Identifizierung jeweils mit einem kleinen Dreieck in der oberen linken Ecke ihres Funktionsblocks markiert sind. Fig. 5 zeigt die prinzipielle Architektur des Systems, bestehend aus einer Anzahl n von Komponenten K₁,...Kₙ, denen ein Komponenten-Server KS zugeordnet ist und die über das jeweilige Betriebssystem BS auf eine Anzahl m externer Geräte G₁,...Gₘ Zugriff haben. Aus dieser Software-Sichtweise besteht das System folglich aus einer Menge von miteinander kommunizierenden Komponenten K₁, ...Kₙ, wobei es auf dieser Ebene keine Hierarchien zwischen den einzelnen Komponenten K₁,...Kₙ gibt.

Die Kommunikation zwischen den Systemobjekten basiert auf herkömmlichen Vorgehensweisen, wie "Remote-Procedure-Call" (RPC) bzw. dessen Java-Version, der "Remote-Method-Invocation" (RMI). Methoden einer Komponente, die von einer anderen Komponente aufgerufen werden sollen, werden in einer Interface-Datei beschrieben, vergleichbar mit der "Interface-Description-Language" (IDL) von CORBA. Aus dieser Datei werden dann die nötigen "Stubs" generiert, die zu einer Komponente hinzugebunden werden. Zur Adressierung der Methoden wird der "Uniform-Resource-Locator" (URL) verwendet, mit dem diejenige Maschine adressiert wird, auf der die angesprochene Komponente läuft, und auf dem des weiteren die Komponente selbst und die gewünschte Methode mit Argumenten angegeben werden können. Durch die UAL-Adressierung wird Ortstransparenz, d.h. Positionierungsunabhängigkeit der Komponenten, erreicht, da die Auflösung der Maschinenadresse unabhängig von der Client-Instanz erfolgt, z.B. über einen "Domain-Name-Service" (DNS).

Fig. 6 zeigt eine funktionsorientierte Anordnung der Komponenten des Systems. In dieser Darstellung ist eine dreistufige Hierarchie der Komponenten vorgesehen, bei der eine oberste.Schicht aus eigentlichen Anwendungen, eine mittlere Schicht aus Anwendungsunterstützungsfunktionen und eine untere Schicht aus Schnittstellensteuerungsfunktionen besteht. Die Komponenten der obersten Schicht bilden die eigentlichen Anwendungen oder Dienste, d.h. Anwendungs-Komponenten AK₁, AK₂, AK₃, .... Beispielhaft sind ein Nachrichtenvorleser und eine Navigationskomponente gezeigt. Zur Erfüllung ihrer Aufgaben greifen die Anwendungs-Komponenten AK₁, AK₂, ... auf die mittlere Schicht von anwendungsunterstützenden Komponenten UK₁, UK₂, UK₃, ... zu, die auch als Aggregations-Komponenten bezeichnet werden können, da sie Rohdaten, die aus verschiedenen Quellen im Fahrzeug und aus der fahrzeugexternen Infrastruktur des Netzes kommen können, geeignet aggregieren. Beispiele für solche Anwendungsunterstützungskomponenten sind die oben erläuterten Location-Manager- und Präsentations-Manager-Komponenten sowie die Kommunikatons -Manager-Komponente. Diese anwendungsunterstützenden Komponenten UK₁, UK₂, UK₃, ... greifen ihrerseits auf die Interface-Komponenten IK₁, IK₂, IK₃, ... der unteren Schicht zu, die eng an fahrzeugseitige Hardware-Geräteeinheiten angebundene Komponenten darstellen, wie der oben erläuterte (serielle) Port-Manager, eine CAN-Manager- und eine Anzeige-Manager-Komponente.

Allen Komponenten ist der Komponenten-Lader KL zugeordnet, und die Kommunikation mit externen Geräten, z.B. einer optischen Anzeige 24, einer Audio-Schnittstelle 27, Modems 28, einem GPS-Empfänger 29 und einem DVD-Spieler 30 erfolgt über die JVM/-Betriebssystem-Schicht 15. Auf diese Weise unterstützt das System externe Geräte, die der Benutzerschnittstelle zuzuordnen sind, aber auch Geräte, die der Benutzer neu in das System einbringt. Wenn für nachgebrachte externe Geräte keine Interface-Komponenten vorhanden sind, sind sie nachträglich zu laden. Den erwähnten, funktionsorientiert in drei Schichten gegliederten Komponenten ist gemeinsam eine Konfigurations-Manager-Komponente KM zugeordnet, mit deren Hilfe die Komponenten dynamisch zwischen den verschiedenen Systemteilen des Systems verlagert werden können.

Ein weiterer Anwendungsfall ist das Nachladen von Komponenten insbesondere der obersten Schicht, d.h. von Anwendungs-Komponenten. Das mit Hilfe der vorliegenden Plattform mögliche Nachladen solcher Anwendungs-Komponenten behebt die Schwierigkeit, daß für Fahrzeugsysteme im Moment ihrer Projektierung häufig nicht genau bekannt ist, welche Dienste für den Kunden über die gesamte Lebensdauer des Fahrzeugs hinweg von Interesse sein werden. Insbesondere Kommen hier auch Dienste in Betracht, die für ihre Nutzung notwendige Software vor der Dienstausführung von einem fahrzeugexternen Systemteil in das Fahrzeug laden. Das zentrale Element für das Nachladen von Komponenten ist der Komponenten-Lader KL. Er ermöglicht-sowohl das Einbringen neuer Komponenten in den betreffenden Systemteil wie auch das Auslagern nicht mehr benötigter Komponenten.

Die Fähigkeit zum dynamischen Verlagern von Komponenten ist bei Fahrzeugsystemen insbesondere aufgrund der begrenzten fahrzeugseitigen Rechenkapazitäten von Interesse. So ist es zum einen wünschenswert, nur eine relativ geringe Rechenkapazität im Fahrzeug vorhalten zu müssen und die Hauptlast der Berechnungen in der fahrzeugexternen Infrastruktur des Systems zu erledigen, zum anderen sollen die Kommunikationskosten zur Ankopplung des fahrzeugseitigen systemteils an das Netz möglichst gering gehalten werden. Nun sind jedoch die Kommunikationskosten je nach Land oder Region zum Teil beträchtlich verschieden. Berücksichtigt man die Mobilität von Fahrzeugen, so kann sich diese Randbedingung sogar während einer Fahrt ändern. Wird zudem noch die absolute Verfügbarkeit eines Kommunikationsdienstes in das Kostenmodell aufgenommen, so ergibt sich ein Optimierungsproblem, das mit einer dynamischen Verschiebbarkeit von Komponenten zwischen den Systemteilen deutlich besser lösbar ist als mit einer starren Struktur und Verteilung der Komponenten. Der Konfigurations-Manager KM dient nun dazu, eine jeweilige verlagerte Komponente in ihre neue Umgebung "hineinzukonfigurieren" und die bereits vorhandenen Komponenten über die neu in den betreffenden Systemteil hinzugekommene Komponente zu "informieren", d.h. deren Konfiguration daran anzupassen. Zu diesem Zweck hat der Konfigurations-Manager KM über die Konfigurations-Schnittstellen Zugriff auf die einzelnen Komponenten des betreffenden Systemteils. Der Konfigurations-Manager KM weiß, welche Komponenten im System sind, überprüft deren Konsistenz und nimmt dann die geeigneten modifizierenden Konfigurationszugriffe auf die einzelnen Komponenten vor.

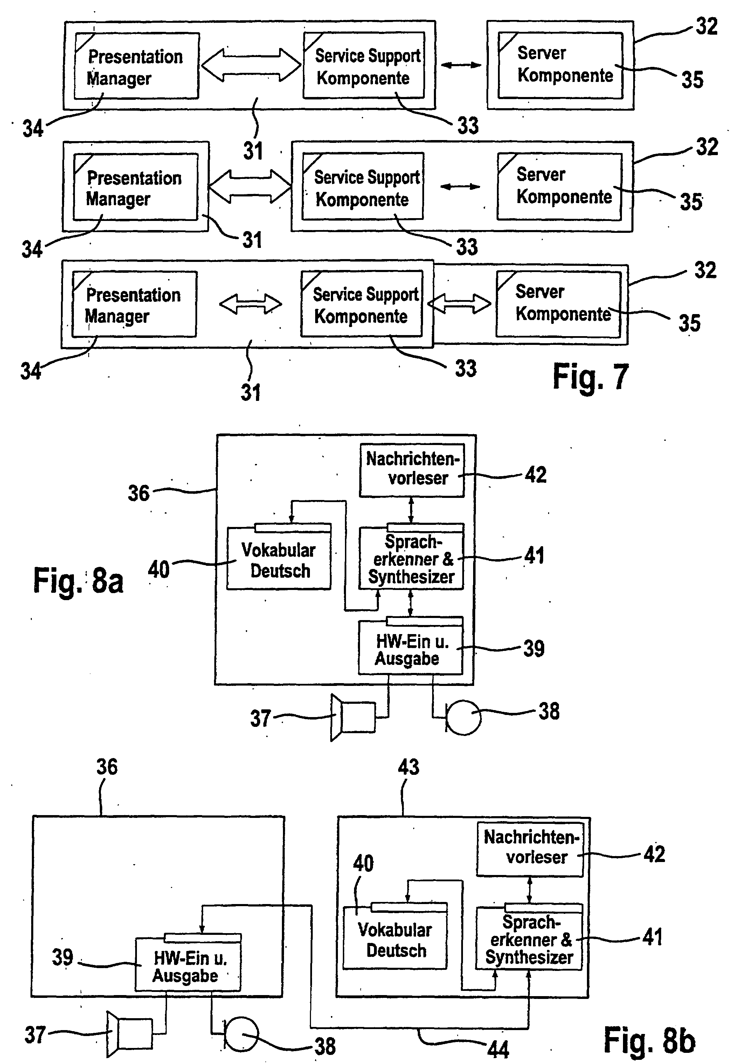

Fig. 7 zeigt die Fähigkeit zum dynamischen Verlagern einer Komponente zwischen einem Fahrzeug 31 einerseits und fahrzeugexterner Systeminfrastruktur 32 andererseits am Beispiel einer Service-Support-Komponente 33 anhand von drei unterschiedlichen Szenarien, die eine solche Komponentenverlagerung wünschenswert machen, siehe hierzu auch den Zeitschriftenaufsatz S. Hild und P. Robinson, "Mobilizing Applications", IEEE Personal Communications, 4, Nr. 5, 1997, Seite 26. Ausgegangen wird hierbei von einem erweiterten Client/Server-Modell, bei dem zwischen einer Präsentations-Manager-Komponente 34 im Fahrzeug 31 als Client und einer Server-Komponente 35 auf der Infrastrukturseite noch als Server die Service-Support-Komponente 33 zwischengeschaltet ist, die in reduziertem Maß gewisse Server-Funktionen statt der infrastrukturseitigen Server-Komponente 35 ausführen kann.

Im Fall hoher Kommunikationskosten zwischen Fahrzeug 31 und Infrastruktur 32 wird die im obersten Teilbild von Fig. 7 dargestellte Lösung gewählt, bei der die Service-Support-Komponente 33 im Fahrzeug 31 positioniert ist, so daß sie ihre Kommunikation mit dem Präsentations-Manager 34 fahrzeugintern abwickeln kann und ein hoher Anteil der Berechnungen im Fahrzeug 31 durchgeführt wird, was die Kommunikation mit der Infrastruktur 32 minimal hält oder zeitweise ganz vermeidet. In diesem Fall bildet das Fahrzeug einen "Thick Mobile Host", der eine reduzierte Version der infrastrukturseitigen Servicer-Komponente 35 in Form der Service-Support-Komponente 33 enthält.

Ist der Aufwand für die Kommunikation zwischen Fahrzeug 31 und Infrastruktur 32 hingegen vergleichsweise gering, ist es günstig, die in Fig. 7 im mittleren Teilbild gezeigte Lösung zu wählen, bei der die Service-Support-Komponente 33 in der Infrastruktur 32 angeordnet ist und dort die Vorteile der größeren Rechenkapazität und die Verfügbarkeit weiterer, im Datennetz befindlicher Ressourcen, wie z.B. aktuelle Verkehrsdaten, nutzen kann. In diesem Fall bildet das Fahrzeug einen "Thin Mobile Host".

Die dynamische Verlagerung von Komponenten, wie hier der Service-Support-Komponente 33, dient nun dazu, eine bleibende Beschränkung auf die eine oder die andere dieser beiden erwähnten Lösungen zu vermeiden und stattdessen in der Lage zu sein, zur Systemlaufzeit die Komponenten je nach Randbedingungen zwischen den Systemteilen, hier zwischen der Infrastruktur 32 und dem Fahrzeug 31, hin und her zu verschieben, d.h. die Service-Support-Komponente 33 wahlweise in das Fahrzeug 31 oder in die Infrastruktur 32 zu verlagern, wie mit dem unteren Teilbild von Fig. 7 angedeutet ist. Das Fahrzeug 31 bildet dann einen "komponentenbasierten Host", in den wahlweise Komponenten aus der Infrastruktur 32 geladen bzw. aus dem Komponenten in die Infrastruktur 32 ausgelagert werden können.

Diese wesentliche Eigenschaft des vorliegenden Systems ist konkreter am Beispiel einer Sprachbedien-Anwendung in den Fig. 8a und 8b veranschaulicht. Fig. 8a zeigt ein Sprachbediensystem-Steuergerät 36, das mit einem Komponentensystem, d.h. mit einem Komponenten-Lader, ausgerüstet ist. Über das Steuergerät 36 erfolgt ein Zugriff auf die notwendige Hardware, d.h. einen Lautsprecher 37 und ein Mikrofon 38. Auf diesem Systemteil laufen folgende Komponenten. Eine hardwarebezogene Komponente 39 dient dem Zugriff auf das Mikrofon 38 und den Lautsprecher 37. Eine erste anwendungsunterstützende Komponente 40 enthält das für die gewünschte Sprachbedienung erforderliche Vokabular, z.B. in Deutsch. Eine zweite anwendungsunterstützende Komponente 41 bildet einen Spracherkenner und Synthesizer, der die notwendige Spracherkennung und Sprachsynthese bewerkstelligt. Eine Anwendungskomponente in Form eines Nachrichtenvorlesers 42 dient zur Steuerung der Applikation.

Ausgehend von diesem Sprachbedien-Systemteil besteht ein mögliches Szenario darin, die Vokabular-Komponente 40 zwecks Länderanpassung des Systems und damit des Fahrzeugs gegen eine solche mit einer anderen Sprache auszutauschen. Ein anderes Szenario kann im Fall eines Mietfahrzeugs darin bestehen, eine Anpassung an die jeweils von einem Kunden gewünschte Sprache dadurch zu realisieren, daß sich die Vokabular-Komponente mit der jeweiligen Sprache über ein Menü vom Kunden auswählen läßt, woraufhin die betreffende Komponente nachgeladen wird. Nach Rückgabe des Mietfahrzeugs wird die nachgeladene Komponente dann wieder entfernt.

Ein komplexerer Fall einer Komponentenverschiebung für den Systemteil von Fig. 8a ist in Fig. 8b dargestellt. Dieser Fall betrifft eine Auslagerung möglichst vieler Komponenten des Sprachbedien-Systemteils vom Fahrzeug 36 in fahrzeugexterne Systemteile, d.h. in die fahrzeugexterne Infrastruktur 43 des Gesamtsystems. Speziell können durch die Fähigkeit des vorliegenden Systems zur dynamischen Komponentenverlagerung die Anwendungs-Komponente 42 und die beiden anwendungsunterstützenden Komponenten 40, 41 in die Infrastruktur 43 verlegt werden, wo sie aufgrund der,höheren Rechnerleistung effizienter arbeiten können. Im Fahrzeug 36 verbleibt die fahrzeugerätenahe Interface-Komponente 40. Die Daten werden über die fahrzeugseitig verbliebene Schnittstellen-Komponente 40 und eine drahtlose Verbindung 44 zwischen Fahrzeug 36 und fahrzeugexterner Infrastruktur 43 übertragen. Abhängig von der vorhandenen drahtlosen Kommunikation, insbesondere ihrer Verfügbarkeit und ihren Kosten, kann auf diese Weise ein optimaler Kompromiß für die Verteilung der Komponenten 39 bis 42 des Sprachbediensystems zwischen Fahrzeug 36 und fahrzeugexterner Infrastruktur 43 gewählt werden.

Je nach Anforderungen an fahrzeugbezogene Dienste, wie Telematik-Dienste, ist beim vorliegenden verteilten Fahrzeuginformationsverarbeitungs- und Fahrzeugsteuersystem eine bestimmte Basismenge von Komponenten in Fahrzeugen und in der Infrastruktur vorhanden, die Dienste wie beispielsweise "Zeit", "Ort/Position" oder "Map-Matching" anbieten. Diese Basisdienste können dann von mehreren anderen Diensten verwendet werden. So kann beispielsweise die Ortsinformation sowohl von einem Navigationsdienst genutzt wie auch von einem Pannenhilfsdienst dazu verwendet werden, die aktuelle Fahrzeugposition an die Pannenhelfer weiterzugeben. Dienstanbieter müssen solche Basisteile des Systems nicht wiederholt entwerfen, sondern können auf die vorhandenen Basiskomponenten aufsetzen. Mit Hilfe der vorliegenden komponentenbasierten Systemarchitektur können neue Dienste auf der Basis existierender Komponenten auf zwei von der Systemarchitektur unterstützte Arten realisiert werden, und zwar nach einem schnittstellenbasierten oder einem ereignisgesteuerten Dienstmodell.

Beim schnittstellenbasierten Modell wird davon ausgegangen, daß die existierenden Komponenten und ihre unter Umständen umfangreichen Dienste-Schnittstellen mit allen notwendigen Methoden bekannt sind. Ein neuer Dienst kann dann einfach durch die Verwendung der existierenden Funktionen erstellt werden. Voraussetzung ist, daß das notwendige Wissen über die prinzipielle Existepz der Komponente und über deren genauen Dienstumfang erhalten wird.

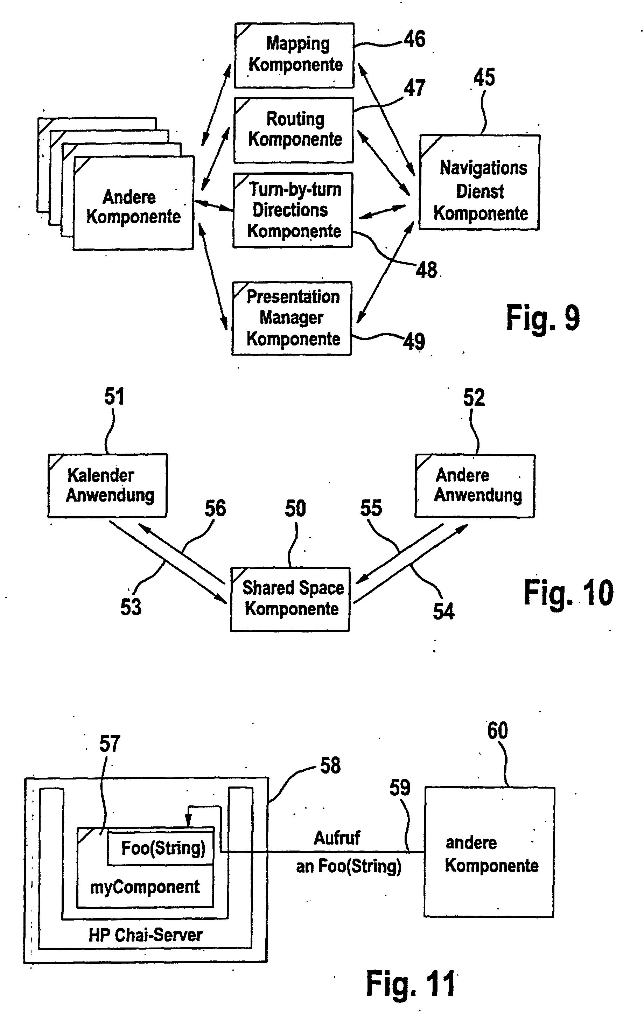

Fig. 9 zeigt ein Navigations-Teilsystem, das auf einem solchen schnittstellenbasierten Modell aufgebaut ist. Dabei greift eine Komponente "Navigationsdienst" 45 auf die Dienste anderer Komponenten zu, wie auf eine "Mapping"-Komponente 46, eine "Routing"-Komponente 47, eine Raddrehzahlerfassungs-Komponente 48, eine Präsentations-Manager-Komponente 49 etc., um ihren Dienst gegenüber dem Anwender zu erbringen. Bei der Programmierung der Navigationsdienst-Komponente 45 müssen die Schnittstellen der verwendeten Komponenten bekannt sein.

Fig. 10 zeigt den Fall eines ereignisgesteuerten Modells, das durch Verwenden einer "Shared-Space"-Komponente 50 realisiert ist, die einen server-basierten, von mehreren beteiligten Komponenten gemeinsam genutzten Datenspeicher darstellt, in den die beteiligten Komponenten bestimmte interessierende Werte/Objekte einschreiben können, wie dies in Fig. 10 für eine Kalenderanwendungskomponente 51 und eine weitere Anwendungskomponente 52 dargestellt ist. Des weiteren können sich die beteiligten Komponenten bei dieser "Shared-Space"-Komponente 50, die somit als eine Datenhaltüngs-Komponente fungiert, registrieren lassen, um im Fall eines neu auftretenden Wertes/Objektes, der für sie relevant ist, informiert zu werden, als sogenannte "event triggered notification" bezeichnet.

Ansätze dieser Art verschieben das oben angesprochene Problem des Wissens über die Existenz von Komponenten auf eine höhere Ebene, indem die Kommunikation zwischen Komponenten immer über die "Share-Space"-Komponente 50 stattfindet, die mit einer sehr kleinen API realisiert werden kann und jeder Komponente bekannt ist. Die Komponenten müssen sich lediglich über die Inhalte einigen, die in die "Shared-Space"-Komponente 50 geschrieben werden. Solche Ansätze sind z.B. unter den Bezeichnungen, "Linda Space", siehe Internet-Seite "http://www.cs.yale.edu/HIML/YALE/CS/ Linda/linda.html" und "Java Spaces", Sun Microsystems, Internet-Seite http://java.sun.com/products/javaspaces/specs" in der allgemeinen EDV geläufig.

Im Beispiel von Fig. 10 liefert die Kalender-Anwendung 51 Neueinträge 53 in die Datenhaltungs-Komponente 50. Interessiert sich eine andere Anwendung 52 für derartige Daten, erhält sie die betreffende Dateninformation 54 von der Datenhaltungs-Komponente 50, wenn sie bei ihr hierfür registriert ist. Die andere Anwendung 52 kann daraus neue Daten 55 generieren und den übrigen Komponenten zur Verfügung stellen, indem sie diese in die Datenhaltungs-Komponente 50 schreibt. Interessiert sich die Kalender-Anwendung 52 für diese neuen Daten 55, kann sie die betreffende Information 56 von der Datenhaltungs-Komponente 50.erhalten, woraufhin der Datenaustauschkreislauf wieder von vorne beginnen kann.

Der Vorteil dieses Modells besteht in der voneinander unabhängigen Programmierung der Komponenten und dem geringen Umfang der "Shared-Space"-API. Außerdem können neue Komponenten problemlos in das System integriert werden und sofort aktiv zur Erbringung von Mehrwertdiensten beitragen. Applikationen müssen hierzu "kooperativ" geschrieben werden, d.h. so, daß sie relevante Information auch tatsächlich in die "Shared-Space"-Komponente schreiben. In der "Shared-Space"-Komponente sind geeignete Mechanismen, wie Zeitüberwachung, Transaktionsmodelle etc., implementiert, die das Auftreten oszillierender Effekte zwischen Komponenten beim wechselseitigen Einschreiben neuer Werte in die "Shared-Space"-Komponente unterbinden. Vorteilhaft kann eine kombinierte Realisierung von zum Teil schnittstellenbasierter und zum Teil ereignisgesteuerter Modellierung in Abhängigkeit von den jeweiligen Anwendungen sein. So ist z.B. bei der Verarbeitung eines Motordrehzahlwertes, der ständig in Abständen von wenigen Millisekunden zur Verfügung steht, ein ereignisgesteuertes Modell, bei dem jeder neue Drehzahlwert in die "Shared-Space"-Komponente geschrieben und alle potentiellen Abnehmerkomponenten darüber benachrichtigt werden, wenig sinnvoll, so daß hierfür eine schnittstellenbasierte Modellierung zu favorisieren ist.

Eine plattformunabhängige Realisierung des vorliegenden verteilten Fahrzeuginformationsverarbeitungs- und Fahrzeugsteuersystems ist, wie schon erwähnt, z.B. durch Wahl der Entwicklungs- und Implementierungsumgebung "Java" möglich, da diese bereits an vielen Stellen eine objektorientierte Implementierung von Komponenten direkt unterstützt, wobei als Komponenten-Lader, wie ebenfalls oben erwähnt, z.B. der in Java implementierte Chaiserver von Hewlett-Packard genutzt werden kann. Um einen Zugriff auf die Systemhardware zu ermöglichen, der von Java nicht standardmäßig vorgesehen ist, werden zusätzliche Klassen in das System gebracht, die ebenfalls über das Systemkonfigurationsmanagement überwacht und nur bei Bedarf in das Fahrzeug geladen werden. Das Herausnehmen einer Komponente, um die betreffende Ressource wieder freizumachen, wird im Rahmen der dynamischen Komponentenverlagerung ebenfalls durch den ChaiServer unterstützt. Durch die Implementierung in Java wird eine hohe Plattformunabhängigkeit erreicht. Komponenten können in einer Komponentendatenbank in der fahrzeugexternen Infrastruktur gespeichert und bei Bedarf in die entsprechenden Systeme geladen werden. Die Komponenten sind vorzugsweise unter objektorientierten Gesichtspunkten modelliert und implementiert und ähneln dabei den Java "Servlets", die dazu verwendet werden, die Funktionalität der Serverseite auf einfache Art zu erweitern, siehe für die allgemeine EDV die Veröffentlichung "Servlets" von Sun Microsystems, Internet-Seite "http://java.sun.com/products/javaserver/servlets". Die Kommunikation zwischen den Komponenten basiert auf der Java-RMI.

Methoden von Komponenten, die im Kontext des ChaiServers laufen, werden mittels HTTP aufgerufen, siehe J. Morgan, "The HEHAW Invocation Model, Broadband Information Systems, Hewlett-Packard, Palo Alto, 1997. Die Verwendung von HTTP hat den Vorteil, daß es fast überall unterstützt wird und auch "Firewalls" übertragbar sind. Durch die oben erwähnte Adressierung und Aufrufsyntax mittels "uniform resource locator" (URL) wird die gewünschte Ortstransparenz erreicht.

Fig. 11 zeigt einen diesbezüglichen Anwendungsfall mit einer Beispielkomponente 57, die auf einer Fahrzeug-Maschine 58 ausgeführt wird. Die Komponente 57 stellt eine Methode "Foo" zur Verfügung, die mit einem String-Argument aufgerufen wird. Das Ergebnis der Methode kann ein HTML-Dokument sein. Die HTTP-Aufrufsyntax beinhaltet dann bei einem Aufruf 59 durch eine andere Komponente 60 die Adresse der Fahrzeug-Maschine 58, die Bezeichnung der Beispielkomponente 57 und die Angabe der Methode "Foo" mit "html"-Charakterisierung.

Die obige Beschreibung eines vorteilhaften Ausführungsbeispiels und möglicher Modifikationen hiervon macht deutlich, daß das erfindungsgemäße verteilte Fahrzeuginformationsverarbeitungs- und Fahrzeugsteuersystem eine flexible und dynamisch anpaßbare Umgebung für fahrzeugbezogene Dienstanwendungen bereitstellt. Die objektorientierte Modellierung und einfache Kombinierbarkeit der Komponenten durch ihre einheitlichen Schnittstellen erlauben einen raschen und einfachen Aufbau neuer Dienste. Durch die zur Systemlaufzeit mögliche Verlagerung von Komponenten zwischen Fahrzeug und fahrzeugexterner Infrastruktur kann sich das System optimal den sich dynamisch ändernden Randbedingungen in der Infrastruktur anpassen.

## Patentansprüche

1. Verteiltes Fahrzeuginformationsverarbeitungs- und Fahrzeugsteuersystem mit
- wenigstens einem fahrzeugseitigen, ersten Systemteil (1a) und wenigstens einem weiteren, zweiten Systemteil (2a, 3a), die jeweils zur Ausführung einer oder mehrerer fahrzeugbezogener Anwendungsfunktionen eingerichtet sind und miteinander über ein Datenübertragungsnetzwerk (4) kommunizieren, wobei die Systemteile (1a, 2a, 3a) einen komponentenbasierten Aufbau aus verschiedenen, miteinander kommunizierenden Komponenten (AK₁, ...) zur Ausführung unterschiedlicher Funktionen besitzen,
**dadurch gekennzeichnet, daß**
- jede Komponente eine Funktionsaufruf-Schnittstelle (5a), über welche die von der Komponente ausgeführte Funktion von anderen Komponenten desselben oder eines anderen Systemteils aufrufbar ist, und eine Könfigurations-Schnittstelle (5b) aufweist, über die ihre Konfiguration variabel festlegbar ist, wobei eine Konfigurationsmanagereinheit (KM) .vorgesehen ist, welche die Komponenten über ihre Konfigurations-schnittstelle in Abhängigkeit davon konfiguriert, welche anderen Komponenten im System vorhanden sind.

2. Verteiltes System nach Anspruch 1, weiter
**gekennzeichnet durch**
einen den Komponenten des jeweiligen Systemteils zugeordneten Komponenten-Lader (KL).

3. Verteiltes System nach Anspruch 1 oder 2, weiter
**dadurch gekennzeichnet, daß**
die Komponenten eines jeweiligen Systemteils funktionsorientiert hierarchisch in eine Anwendungs-Komponentenschicht, eine Schnittstellen-Komponentenschicht und eine zwischenliegende Aggregations-Komponentenschicht gruppiert sind.

4. Verteiltes System nach einem der Ansprüche 1 bis 3, weiter
**gekennzeichnet durch**
Mittel zum dynamischen Velagern einer oder mehrerer Komponenten (33) während der Systemlaufzeit zwischen verschiedenen Systemteilen (31, 32).

5. Verteiltes System nach einem der Ansprüche 1 bis 4, weiter
**dadurch gekennzeichnet, daß**
je zwei Anwendungs-Komponenten nach einem schnittstellenbasierten Modell direkt oder nach einem ereignisgesteuerten Modell über eine Datenhaltungs-Komponente (50) kommunizieren.

## Claims

1. A distributed vehicle data processing and vehicle control system with
- at least one first system part (1a) positioned in a vehicle and at least one further second system (2a, 3a) which are set up to carry out one or more vehicle-related application functions and which communicate with each other via a data transmission network (4),
- the system parts (1a, 2a, 3a) having a component-based structure consisting of various communicating components (AK₁, etc.) to carry out various functions,
**characterised in that**
each component has a function call interface (5a) via which the function carried out by the component can be called by other components in the same or another system part, and a configuration interface (5b) via which its configuration can be set variably, a configuration management unit (KM) which configures the components via its configuration interface. dependent upon which other components are present in the system also being provided.

2. A distributed system in accordance with claim 1, further
**characterised by**
a component loader (KL) associated with the components of the given system part.

3. A distributed system in accordance with claim 1 or 2, further
**characterised in that**
the components of a given system part are grouped hierarchically on the basis of function into an application component layer, an interface component layer and an intermediate aggregation component layer.

4. A distributed system in accordance with one of claims 1 to 3, further
**characterised by**
means for the dynamic relocation of one or more components (33) between various system parts (31, 32) while the system is running.

5. A distributed system in accordance with one of claims 1 to 4, further
**characterised in that**
two application components communicate either directly according to an interface-based model or via a data organisation component (50) according to an event-controlled model.

## Revendications

1. Système distribué de traitement d'informations d'un véhicule et de commande d'un véhicule, comportant
- au moins une première partie (1a) située dans le véhicule, et au moins une autre, seconde partie (2a, 3a), ces parties du système étant agencées respectivement pour exécuter une ou plusieurs fonctions d'utilisation rapportées au véhicule et communiquant entre elles par l'intermédiaire d'un réseau (4) de transmission de données, les parties (1a, 2a, 3a) du système possédant un agencement basé sur des composants et constitué par différents composants (AK₁, ...) communiquant entre eux, pour l'exécution des différentes fonctions,
**caractérisé en ce que**
- chaque composant possède une interface (5a) d'appel de fonction, au moyen de laquelle la fonction exécutée par le composant peut être appelée par d'autres composants de la même partie du système ou d'une autre partie du système, et une interface de configuration (5b), au moyen de laquelle la configuration peut être fixée d'une manière variable, une unité (KM) de gestion de configuration étant prévue, qui configure les composants par l'intermédiaire de leur interface de configuration en fonction des autres composants qui sont présents dans le système.

2. Système distribué selon la revendication 1, **caractérisé en outre par** un chargeur (KL) de composants, qui est associé aux composants de la partie considérée du système.

3. Système distribué selon la revendication 1 ou 2, **caractérisé en outre en ce que** les composants d'une partie respective du système sont regroupés hiérarchiquement, d'une manière axée sur la fonction, en une couche de composants d'utilisation, une couche de composants d'interface et une couche intercalaire de composants d'agrégation.

4. Système distribué selon l'une des revendications 1 à 3, **caractérisé en** outre pour décaler de façon dynamique un ou plusieurs composants (33) pendant le temps de fonctionnement du système, entre différentes parties (31, 32) du système.

5. Système distribué selon l'une des revendications 1 à 4, **caractérisé en outre en ce que** respectivement deux composants d'utilisation communiquent directement en fonction d'un modèle basé sur une interface ou par l'intermédiaire de composants (50) de conservation des données, selon un modèle commandé en fonction des évènements.
